(19)

Europäisches
Patentamt
European
Patent Office
Office européen
des brevets

(11) **EP 1 818 572 B1**

(12) **EUROPEAN PATENT SPECIFICATION**

(45) Date of publication and mention
of the grant of the patent:
**03.03.2010 Bulletin 2010/09**

(51) Int Cl.:
*F16H 61/00* (2006.01)  *B60W 10/06* (2006.01)
*B60W 10/10* (2006.01)

(21) Application number: **07109422.1**

(22) Date of filing: **19.12.2003**

(54) **Method for operating a continuously variable transmission**

Verfahren zur Betätigung eines stufenlosen Getriebes

Procédé de fonctionnement d'une transmission continuellement variable

(84) Designated Contracting States:
**AT BE BG CH CY CZ DE DK EE ES FI FR GB GR
HU IE IT LI LU MC NL PT RO SE SI SK TR**

(30) Priority: **23.12.2002 NL 1022241
23.12.2002 NL 1022242**

(43) Date of publication of application:
**15.08.2007 Bulletin 2007/33**

(62) Document number(s) of the earlier application(s) in
accordance with Art. 76 EPC:
**03813597.6 / 1 579 128**

(73) Proprietor: **Bosch Transmission Technology b.v.
5026RA Tilburg (NL)**

(72) Inventors:
• **Van der Laan, Maaike
Van Doorne's Transmissie b.v.
5000 AM Tilburg (NL)**
• **Van Drogen, Mark
Van Doorne's Transmissie b.v.
5000 AM Tilburg (NL)**

(74) Representative: **Plevier, Gabriel Anton Johan
Maria
Bosch Transmission Technology B.V.
PO Box 500
5000 AM Tilburg (NL)**

(56) References cited:
**DE-A- 10 130 057     DE-A- 10 225 285
US-A- 5 556 346       US-A- 6 050 912
US-A1- 2001 049 315   US-B1- 6 436 004**

**Description**

The present invention relates to a method for operating a continuously variable transmission as described in the preamble of Claim 1.

A transmission of this type is generally known, for example from EP-A 1 167 839 in the name of the present Applicant. In this type of transmissions, which are based on friction and clamping force, a minimum force is required by which the discs clamp the drive belt in order to enable the latter to transmit a rotation from one pulley to the other. In this context, a minimum axial clamping force Fax-min required, which is applied to the drive belt by one pulley and is necessary in order for a torque which is supplied to be passed on at least virtually without slip between the belt and the pulley, is in practice-often calculated from the torque T supplied times the cosine of half an angle $\phi$ defined between the tapering pulley discs divided by the product of twice a running radius R of the drive belt between the discs of a pulley and an empirically defined torque transmission coefficient $\tau$:

$$\text{Fax-min} = (T \cdot \cos(\tfrac{1}{2}\phi)) \,/\, (2 \cdot R \cdot \tau) \qquad\qquad (1)$$

In this equation, in practice the coefficient of friction $\mu$, in the contact between drive belt and pulley is often substituted for the torque transmission coefficient $\tau$. Equation (1) can be considered a good approximation.

The value for the minimum clamping force Fax-min required which has been determined in this way in principle applies to both pulleys, but to maintain a constant transmission ratio it may be necessary for the clamping force on one of the two pulleys to be selected to be higher still. Also, to enable the transmission to shift, different clamping forces may be required, or at least a different ratio between the clamping forces of the respective pulleys. However, the abovementioned minimum clamping force Fax-min required always applies to at least one of the two pulleys, with a higher clamping force on the drive belt then being applied at the other pulley in order to achieve the desired transmission ratio or a desired speed of a change therein.

The clamping force Fax which is to be applied is in turn generally defined as the minimum axial clamping force Fax-min required times a safety factor Sf:

$$\text{Fax} = \text{Sf} \cdot \text{Fax-min} \qquad\qquad (2)$$

The safety factor Sf takes account, for example, of any inaccuracy in the calculation of the minimum clamping force Fax-min required.

An operating method of this type is in general use and is known, for example, from Patent Publication EP-A 1 218 654, in the name of the present Applicant. The general aim in this context is for the clamping force applied to the drive belt to be as low as possible in relation to the torque supplied, i.e. to use a safety factor which is as low as possible. The reason for this is that the lower the clamping force, the better the efficiency of the transmission. For example, the friction losses will be lower and the power taken up to generate the clamping forces is lower. Also, a lower clamping force is also better for the service life of the belt. However, in the case of clamping forces which are only just above the minimum force required, i.e. just above the clamping force at which slip may occur between pulley and drive, there is a relatively high risk of drive belt slip, for example on account of an unexpected change in torque taken up by the load or the abovementioned inaccuracy in the calculation of the minimum clamping force Fax-min required. According to the prior art, however, drive belt slip must in principle be avoided in order to ensure the robustness and optimum efficiency of the transmission, since drive slip by definition leads to a loss of power and moreover may result in excessive wear.

Therefore, in the known transmission, a value of 1.3 or above is typically used for the safety factor. Alternatively, there are additional known measures which can be used to avoid the occurrence of drive belt slip even with a relatively low safety factor. For example, it is known from European Patent EP-A 1 069 331 to actuate a clutch in a drive line in which the transmission is incorporated in such a manner that it slips at a lower torque level than the drive belt. This is because once the clutch slips, the torque supplied cannot rise or can scarcely rise further, and any excess power is dissipated by the clutch. Another alternative solution is given by the prior art document mentioned first, in which the clamping force is selectively reduced, i.e. the safety factor is selectively reduced as a function of circumstances. Such lowering in this case takes place on the basis that changes in torque which is to be transmitted, whether they are initiated by the internal combustion engine or by circumstances at the load, in relative terms become lower as torque levels increase. Yet a further example is provided by the United States patent US-A-6,436,004 which discloses all the features of the preamble of claim 1, and teaches to apply a reduced safety factor, to simultaneously monitor the drive belt slip and, if such slip occurs, to increase the safety factor in relation to the duration and the amount or intensity thereof.

It is an object of the present invention to provide a method for operating the continuously variable transmission which allows the efficiency or robustness of the transmission to be improved further, in particular by using a relatively low safety factor.

According to a new insight, on which the invention is based, a drive belt can be repeatedly, and under certain circumstances even continuously, subjected to a relatively considerable degree of slip without suffering fatal damage, i.e. without the normal operation of the transmission being adversely affected. This contrasts with previous technical insights, according to which complete slippage of the belt with respect to the pulleys should in principle be limited as much as possible or even avoided altogether.

According to the invention, it is in this case advantageously possible to use a slip characteristic in which it is determined, for the transmission ratios of the transmission and as a function of the axial clamping force and the respective tangential slip rate between the pulley and the drive belt, whether damage, whether fatal or otherwise, to the belt or pulley occurs under these defined conditions, with what is known as a damage line indicating the transition or boundary between these states. A slip characteristic of this type shows that the transmission is under all circumstances to some degree resistant to the abovementioned drive belt slip, and that in particular it is even possible to permit a considerable slip rate at a relatively low clamping force or a relatively high transmission ratio (which is defined as the ratio between the output rotational speed and the input rotational speed of the transmission).

On the basis of this slip characteristic and the new insight derived therefrom, the invention proposes a novel method, which is based on the known operating method for the clamping force and which makes advantageous use of the abovementioned slip between the drive belt and a pulley. The method according to the invention is given in Claim 1 and is characterized in that, when the transmission is operating, the degree to which slip occurs between pulley and drive belt is detected by the electronic operating unit with the aid of slip-detection means, and in that the operating unit, when the transmission is operating, takes measures to reduce the degree of slip if it exceeds a critical limit, by emitting operating signals to relevant components of the transmission.

According to the invention, the degree of drive belt slip can be quantified as the difference between a geometrically defined transmission ratio GR and a measured transmission ratio $\omega_{OUT}/\omega_{IN}$, i.e. the quotient of the rotational speeds $\omega_{OUT}$, $\omega_{IN}$ of the two pulleys and can be defined, for example, as:

$$S = (1 - ((\omega_{OUT}/\omega_{IN}) / GR)) \cdot 100\% \qquad\qquad (4)$$

Since some slip inevitably occurs in the frictional contact between drive belt and pulley, the drive belt slip S has to exceed a certain value, in this case referred to as the critical limit, before it is possible to speak of excessive drive belt slip in the context of the present invention. The critical limit is in this case, for example, empirically determined and is related, for example, to the maximum permissible drive belt slip in accordance with the slip characteristic.

On the basis of the novel insight described in the above, in a further refinement of the invention an operating method for the transmission which is known per se is made adaptive, in such a manner that the starting point is a Sf/τ factor (safety factor/torque transmission coefficient) from the combination of equations (1) and (2) with a safety factor Sf which is slightly greater than 1, for example 1.3, or in a particular case even equal to 1. Each time the critical limit for the drive belt slip is exceeded as referred to above, the value for the Sf/τ factor is adapted, in this case increased, so that the value for the clamping force Fax to be applied, which has been calculated by the operating unit, becomes higher. With a method of this type and with this execution of the operating method, a number of variable parameters are advantageously taken into account, namely an inaccuracy in the determination of the torque supplied by the engine, an inaccuracy in the determination of the running radius, and various parameters which change over the course of time as a result of wear, degeneration and replenishment of lubricating oil, as well as the inaccuracy in any determination of the pinching force, for example on account of properties of a pressure sensor. There is also a risk of excessive drive belt slip on account of external and/or unpredictable variations in the torque supplied. Furthermore, the Sf/τ factor, after it has previously been increased, can be slowly brought back down to its original value.

According to a further refinement of the invention, the torque transmission coefficient τ from the Sf/τ factor is adapted and the safety factor Sf has a value in a range between 1.3 and 1, preferably 1.1. Alternatively, the safety factor Sf can be determined as a function of the maximum permissible degree of the drive belt slip S for the instantaneous transmission ratio of the transmission and the abovementioned axial clamping force Fax, in accordance with the slip characteristic, i.e. a higher safety factor is used under circumstances in which the slip characteristic indicates that the transmission is less able to withstand the drive belt slip S, such as for example in the lowest transmission ratio at a high torque T, i.e. a high axial clamping force Fax which is to be applied, and vice versa. This has the advantage that there is always sufficient space and/or time available to reduce any excessive drive belt slip S before the maximum permissible value for this slip is reached.

According to the invention, it is also possible to provide the operating unit with memory means in which, in the event of excessive drive belt slip of this nature occurring, the value of one or more parameters is stored, which parameters are characteristic of the circumstances under which the drive belt slip occurs, such as for example the torque supplied, the transmission ratio, the temperature of the transmission, the road conditions and the driving characteristics of a driver of a motor vehicle in which the transmission is used. It is then possible, if identical circumstances occur again at a subsequent stage when the transmission is operating, to increase the $Sf/\tau$ factor as a preventative measure, i.e. even before the excessive drive belt slip has occurred. Alternatively, in the operating method according to the invention it is possible to permanently increase, increase to a greater extent and/or reduce more slowly the $Sf/\tau$ factor in response to the critical limit of the drive belt slip being repeatedly exceeded, in particular under specific circumstances.

The invention furthermore provides additional means to limit excessive drive belt slip S to the maximum possible extent and as quickly as possible, in order also to avoid possible damage as a result. Means of this type are relevant for example, although not exclusively, if the clamping force Fax calculated by the operating unit were to be above a maximum achievable or permissible value. According to the invention, additional means of this type may be suitable for rapid, possibly temporary, adjustment of the clamping force Fax, such as a pressure accumulator in the case of a hydraulically generated clamping force Fax, so that this force can be increased relatively quickly in response to the drive belt slip. Alternatively, the additional means may be suitable for relatively rapidly reducing the clamping force Fax, in order to limit a power which is dissipated in the frictional contact between drive belt and pulley disc to the maximum possible extent, the latter preferably in combination with a reduction in the torque supplied, for example realized by at least partially opening a clutch in the drive line between an engine and the transmission, which measure can also be used independently in order to counteract drive belt slip, or by limiting the torque and/or rotational speed generated by the engine, and/or limiting the speed with which the transmission ratio of the transmission can be changed. The extent to which the said additional means are active may, according to the invention, be linked to the seriousness of the drive belt slip, i.e. how close it has come to the maximum permissible drive belt slip in accordance with the slip characteristic.

The slip-detection means according to the invention comprise means for determining the geometrically defined transmission ratio GR. Various detection means which are suitable for this purpose are known in the prior art, such as a drive belt speed-measuring device for determining the circumferential velocity of the drive belt, from which the running radius of the drive belt can be calculated, a pulley disc position sensor for determining the distance between the discs of a pulley, from which once again the running radius of the drive belt can be calculated, or a drive belt position sensor for directly determining the running radius of the drive belt.

In an embodiment in which the geometrically defined transmission ratio GR is determined using the abovementioned pulley disc position sensor, according to a further aspect of the invention, the accuracy of a sensor of this type is optimized by orienting it to the axle of the pulley instead of to the outermost running radius of a pulley disc. This solves the problem of less accurate signals resulting from deformation of a pulley disc which is under pressure from a normal force. Another solution to this problem in accordance with the invention is formed by the use of a characteristic diagram which therefore includes the geometrically defined transmission ratio in relation to one or more parameters such as an axial position of the displaceable pulley disc, a rotational speed of the pulley, the torque supplied and the clamping force. The abovementioned deformation can be taken into account in advance in a characteristic diagram of this type.

The slip-detection means according to the invention comprise means for determining the geometrically defined transmission ratio GR. Various detection means which are suitable for this purpose are known in the prior art, such as a drive belt speed-measuring device for determining the circumferential velocity of the drive belt, from which the running radius of the drive belt can be calculated, a pulley disc position sensor for determining the distance between the discs of a pulley, from which once again the running radius of the drive belt can be calculated, or a drive belt position sensor for directly determining the running radius of the drive belt.

In an embodiment in which the geometrically defined transmission ratio GR is determined using the abovementioned pulley disc position sensor, according to a further aspect of the invention, the accuracy of a sensor of this type is optimized by orienting it to the axle of the pulley instead of to the outermost running radius of a pulley disc. This solves the problem of less accurate signals resulting from deformation of a pulley disc which is under pressure from a normal force. Another solution to this problem in accordance with the invention is formed by the use of a characteristic diagram which therefore includes the geometrically defined transmission ratio in relation to one or more parameters such as an axial position of the displaceable pulley disc, a rotational speed of the pulley, the torque supplied and the clamping force. The abovementioned deformation can be taken into account in advance in a characteristic diagram of this type.

It should be noted that the novel insight on which the invention is based involves not only optimizing the efficiency and/or increasing the robustness of the transmission, but also aims to save on the cost price, for example as a result of the transmission not being provided with means for determining the actual clamping force and feeding it back to the transmission operation.

In an advantageously simple refinement of the invention, the slip-detection means are only effective while the transmission ratio of the transmission is at its highest value, i.e. the overdrive ratio, and/or its lowest value, i.e. the low ratio. This is because it is customary for at least one of the axially displaceable discs of the pulleys to be positioned against a stop in these transmission ratios, so that the geometrically defined transmission ratio GR of the transmission and therefore also the running radius R from Equation (3) has a fixed and known value.

Finally, according to the invention it is advantageous to relate the transmission parameter which has been adapted in accordance with the present invention, such as the Sf/τ factor, to a predetermined nominal value or range of values for this factor. This procedure provides for numerous additional operating options for the transmission. For example, it is possible, if the transmission parameter is outside the fixed nominal range, to signal the need for servicing work, such as an oil change, to the user of the transmission.

The invention will now be explained in more detail, by way of example, on the basis of a drawing, in which:

Figure 1 diagrammatically depicts part of a continuously variable transmission with drive belt and pulleys;
Figure 2 shows an illustration of the insight in accordance with the invention in the form of what is known as a slip characteristic determined for the present transmission; and
Figure 3 shows an example of what is known as a traction curve for the present transmission.

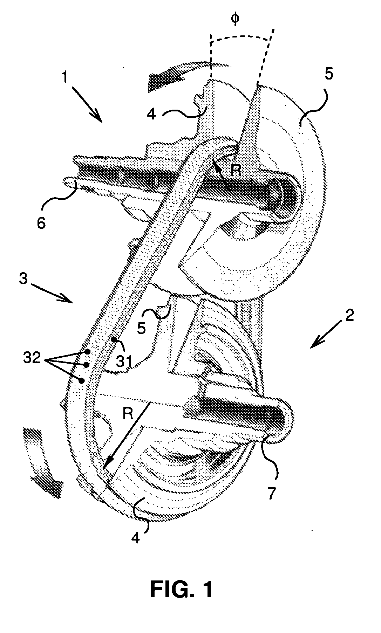

Figure 1 shows the central parts of a continuously variable transmission as is used in the drive of, for example, passenger cars. The transmission per se is generally known and comprises a first and second pulley 1 and 2, each comprising two pulley discs 4, 5, between which there is a drive belt 3. The pulley discs 4, 5 are shaped conically, and at least one disc 4 of a pulley 1, 2 can be displaced in the axial direction along a respective axle 6, 7 on which the discs 4, 5 are mounted. The transmission also includes activation means, which are not shown in the figure and can generally be controlled electronically and act hydraulically so that they can apply an axial force Fax to the abovementioned one disc 4, in such a manner that the drive belt 3 is clamped between the respective discs 4, 5 and the driving force of an axle 6, 7, i.e. a torque T supplied, is transmitted between the pulleys 1, 2 by means of friction in the conical contact surface between the discs 4, 5 and the drive belt 3. In accordance with Equation (1), the axial clamping force Fax-min required for this purpose is determined using the torque T supplied, a contact angle of the said contact surface with the radial direction, i.e. half an angle φ defined between the tapering pulley discs, a running radius R of the drive belt 3 and a torque transmission coefficient τ.

However, the value for the minimum axial clamping force Fax-min required, which has been determined with the aid of Equation (1) is to a certain extent inaccurate on account of possible deviations between the value for the torque T supplied and for the running radius R, which has been recorded for the clamping force determination, and the actual value of these parameters. Moreover, in practice there is often also an unknown difference between the desired value for the axial clamping force Fax to be applied by the activation means and the clamping force which is actually present. The abovementioned inaccuracies and uncertainties mean that the desired value for the axial clamping force Fax is selected to be slightly higher than the minimum clamping force Fax-min required, in particular by multiplying the latter by a safety factor Sf in accordance with Equation (2).

The drive belt 3 shown in Figure 1 comprises a few endless metal support elements 31, each comprising a set of nested thin metal rings which form a carrier for a series of metal transverse elements 32 which absorb the clamping forces exerted between the discs 4, 5 of a pulley 1, 2 and which are moved over the carrier elements 31, pushing one another, towards a driven pulley 2 as a result of a rotation of a driving pulley 1. A drive belt of this type is also known as the Van Doorne pushbelt and is described in more detail in, for example, European Patent EP-A 0 626 526.

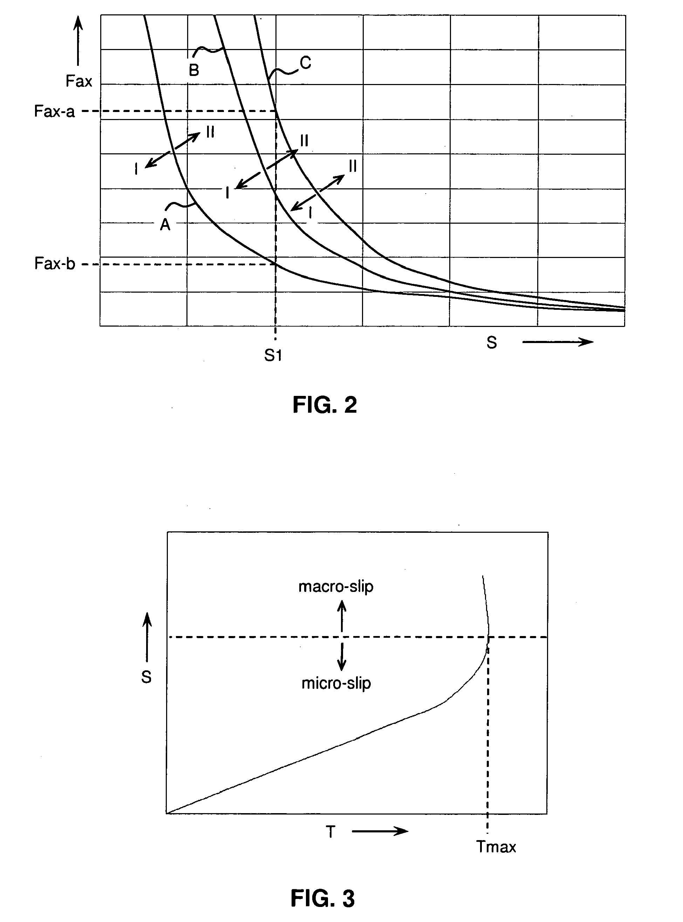

According to the insight on which the present invention is based, this type of drive belt 3 is at least to some extent able to withstand slippage between the pulley 1, 2 and the belt 3, i.e. drive belt slip S. In this context, what is known as a slip characteristic can be used as a starting point for the efforts to optimize robustness and efficiency of the continuously variable transmission, on which the invention is based. Figure 2 shows an example of a slip characteristic of this type, in which it is defined, for the geometric transmission ratios of the transmission and as a function of the axial clamping force Fax and the absolute degree of drive belt slip S, whether damage, whether fatal or otherwise, to the drive belt 3 or the pulley 1, 2 occurs under these defined conditions. The curves or damage lines A, B and C in Figure 2 in this case indicate, for a defined geometric transmission ratio, the maximum permissible value for the drive belt slip S, beneath which, indicated by arrows I, this fatal damage does not occur and above which, indicated by arrows II, this fatal damage does occur. According to an idea on which the invention is based, adhesive wear occurs as a result of slip when, for a defined combination of a force Fax applied to the drive belt by a pulley disc and a slip speed between these two components, i.e. the degree of drive belt slip S, a maximum value therefor is exceeded.

However, it can be seen from the slip characteristic that the transmission is at least to some extent able to withstand the drive belt slip S. Figure 2 also shows that the maximum degree A of drive belt slip S is reached more quickly in the low ratio than this maximum value C in the overdrive ratio, i.e. for the same degree of drive belt slip S1, damage occurs to the drive belt or pulley at a lower level of the axial clamping force Fax-a in the low ratio compared, for example, to the critical level of the clamping force Fax-b in the overdrive ratio, or in other words for a constant level of the axial clamping force Fax, a lower level of drive belt slip S can be deemed acceptable in the low ratio compared to the overdrive ratio. The damage line B relates to a transmission ratio between the low ratio and the overdrive ratio.

Based on the discovery of this phenomenon and the detailed quantification in its slip characteristic, a novel operating method for the continuously variable transmission has been developed, based on any known operating method for determining the axial clamping force Fax, wherein the degree of drive belt slip S can be detected and wherein, if this slip exceeds a critical limit, i.e. in the event of an excessive drive belt slip S, measures are taken to reduce the drive belt slip S. In a further refinement of the invention, the abovementioned critical limit is related to the maximum permissible degree of drive belt slip S in accordance with the slip characteristic.

In addition to what has been described above, the invention also relates to all details in the figures, at least where they can be directly and unambiguously understood by a person skilled in the art, and to the features described in the set of claims which follows.

**Claims**

1. Method for operating a continuously variable transmission provided with two pulleys (1, 2), each provided with two pulley discs (4, 5) which together define a tapering groove and between which a drive belt (3) is clamped with the aid of an axial clamping force Fax for transmitting a torque T supplied to the transmission, during normal operation of the transmission, from one pulley (1) to the other pulley (2) with the aid of friction between the discs (4, 5), which transmission is operated by an electronic operating unit which can influence at least the axial clamping force Fax, the method comprising the steps of detecting the degree of movement between the pulley discs (4, 5) and the drive belt (3), i.e. drive belt slip S by the operating unit with the aid of slip-detection means, and, when the said degree of drive belt slip S exceeds a critical limit, of the operating unit using an operating measure to actively reduce the degree of drive belt slip S, **characterized in that** the said critical limit is determined as a function of a maximum permissible degree of drive belt slip S that is defined at least in relation to the instantaneous transmission ratio of the transmission and the axial clamping force Fax.

2. Method according to Claim 1, **characterized in that** the operating measure consists in increasing a multiplication factor, i.e. Sf/τ factor, which is used in a relationship, which is managed by the operating unit, between the torque T supplied and the axial clamping force Fax which is to be applied to the drive belt (3) by a pulley (1, 2).

3. Method according to Claim 2, **characterized in that** the degree of increase in the multiplication factor is determined by the operating unit as a function of the degree to which the drive belt slip S exceeds the critical limit.

4. Method according to Claim 2 or 3, **characterized in that** during normal operation a relationship, which is managed by the operating unit, between the torque T supplied and the axial clamping force Fax to be applied to the drive belt (3) by a pulley (1, 2) is given by the following equation:

$$Fax = Sf \cdot (T \cdot \cos(\tfrac{1}{2}\phi)) / (2 \cdot R \cdot \tau),$$

where $\phi$ is an angle defined between the tapering pulley discs (4, 5), R is a running radius of the drive belt (3) between the discs (4, 5) of a pulley (1, 2), Sf is a safety factor which has a value which is given by the operating unit and $\tau$ is a torque transmission coefficient, **in that** the Sf/τ factor is given by a quotient of the safety factor Sf and the torque transmission coefficient $\tau$ and **in that** the torque transmission coefficient $\tau$ is increased if the drive belt slip S exceeds the critical limit.

5. Method according to Claim 4, **characterized in that** if the drive belt slip S exceeds the critical limit under undesired circumstances, for example more frequently than desired, the torque transmission coefficient $\tau$ is permanently increased.

6. Method according to Claim 4 or 5, **characterized in that** the safety factor Sf has a value in a range between 1.3 and 1, preferably greater than 1.1.

7. Method according to Claim 4, 5 or 6, **characterized in that** the value of the safety factor Sf is related to a degree of the drive belt slip S which is permissible for the instantaneous transmission ratio of the transmission and the axial clamping force Fax.

8. Method according to Claim 1, **characterized in that** the operating measure consists in reducing the torque T supplied.

9. Method according to Claim 8, **characterized in that** the degree to which the torque T supplied is reduced is determined by the operating unit as a function of the degree to which the drive belt slip S exceeds the critical limit.

10. Method according to Claim 8 or 9, **characterized in that** the operating unit reduces the torque T supplied by emitting a control signal to a driving engine/motor and/or clutch associated with a drive line in which the transmission is used.

11. Method according to one of the preceding claims, **characterized in that** the slip-detection means determine the degree of drive belt slip S as the difference or ratio between a geometrically defined transmission ratio GR of the transmission and a ratio $\omega_{OUT}/\omega_{IN}$ between the rotational speeds of the respective pulleys (1, 2), and **in that** the slip-detection means are pre-programmed with one or both most extreme geometrically defined transmission ratios GR of the transmission, namely the lowest transmission ratio, i.e. low ratio, and/or the highest transmission ratio, i.e. overdrive ratio, in such a manner that, at least when the transmission has adopted one of the two extreme transmission ratios GR, the degree of drive belt slip S can be determined by the slip-detection means.

12. Method according to one of the preceding claims, **characterized in that** the slip-detection means determine the degree of drive belt slip S as the difference or ratio between a geometrically defined transmission ratio GR of the transmission and a ratio $\omega_{OUT}/\omega_{IN}$ between the rotational speeds of the respective pulleys (1, 2), and **in that** the slip-detection means comprise a pulley disc position sensor for determining the geometrically defined transmission ratios GR of the transmission, with which it is possible to determine at least the position of a displaceable disc (4) of a pulley (1, 2), which sensor is preferably arranged in the vicinity of an axle of the pulley (1, 2).

13. Method according to one of the preceding claims, **characterized in that** the operating unit is pre-programmed with a characteristic diagram, in which, for at least a number of transmission ratios of the transmission, the axial clamping force Fax is related to a maximum permissible degree of the drive belt slip S, these relationships being known as the damage lines (A, B, C).

14. Method according to one of the preceding claims, **characterized in that** the operating unit is provided with memory means in which, in the event of the abovementioned critical limit for the drive belt slip S being exceeded, the value of one or more associated parameters is stored, which parameters are characteristic of the circumstances under which the drive belt slip occurs, such as for example the torque supplied, the transmission ratio, the temperature of the transmission, the road conditions and the driving characteristics of a driver of a motor vehicle in which the transmission is used, and **in that**, if identical circumstances occur again, the operating measure is carried out by the operating unit as a preventative measure.

15. Continuously variable transmission which is operated in accordance with one or more of the preceding claims.

**Patentansprüche**

1. Verfahren zum Betrieb eines stufenlosen Getriebes, das mit zwei Rollen (1, 2) versehen ist, die jeweils mit zwei Rollenscheiben (4, 5) versehen sind, welche zusammen eine sich verjüngende Nut definieren und zwischen denen ein Antriebsriemen (3) mit Hilfe einer axialen Klemmkraft Fax zur Übertragung eines dem Getriebe zugeführten Drehmoments T festgeklemmt ist, das bei Normalbetrieb des Getriebes mit Hilfe von Reibung zwischen den Scheiben (4, 5) von einer Rolle (1) auf die andere Rolle (2) übertragen wird, wobei das Getriebe durch eine elektronische Betriebseinheit betrieben wird, die mindestens die axiale Klemmkraft Fax beeinflussen kann, wobei das Verfahren folgende Schritte umfasst: Erfassen des Bewegungsgrades zwischen den Rollenscheiben (4, 5) und dem Antriebsriemen (3), das heißt des Antriebsriemenschlupfs S, durch die Betriebseinheit mit Hilfe von Schlupferfassungsmitteln, und, wenn der Grad des Antriebsriemenschlupfes S eine kritische Grenze überschreitet, Einsatz einer Betriebsmaßnahme durch die Betriebseinheit, um den Grad an Antriebsriemenschlupf S aktiv zu reduzieren, **dadurch gekennzeichnet, dass** die kritische Grenze als eine Funktion eines maximal zulässigen Grades an Antriebsriemenschlupf S, der mindestens in Bezug auf das momentane Übersetzungsverhältnis des Getriebes und die axiale Klemmkraft Fax definiert wird, bestimmt wird.

2. Verfahren nach Anspruch 1, **dadurch gekennzeichnet, dass** die Betriebsmaßnahme aus Erhöhen eines Multiplikationsfaktors, d.h. eines Sf/τ-Faktors, besteht, der in einer durch die Betriebseinheit verwalteten Beziehung zwischen dem zugeführten Drehmoment T und der durch eine Rolle (1, 2) an den Antriebsriemen (3) anzulegenden axialen Klemmkraft Fax verwendet wird.

3. Verfahren nach Anspruch 2, **dadurch gekennzeichnet, dass** der Grad der Erhöhung des Multiplikationsfaktors durch die Betriebseinheit als eine Funktion des Grades bestimmt wird, zu dem der Antriebsriemenschlupf S die kritische Grenze überschreitet.

4. Verfahren nach Anspruch 2 oder 3, **dadurch gekennzeichnet, dass** bei Normalbetrieb eine durch die Betriebseinheit verwaltete Beziehung zwischen dem zugeführten Drehmoment T und der durch eine Rolle (1, 2) an den Antriebsriemen (3) anzulegenden axialen Klemmkraft Fax durch die folgende Gleichung gegeben wird:

$$\texttt{Fax = Sf·(T·cos (1/2}\phi\texttt{)) / (2·R·}\tau\texttt{),}$$

wobei $\phi$ ein zwischen den sich verjüngenden Rollenscheiben (4, 5) definierter Winkel, R ein Rollradius des Antriebsriemens (3) zwischen den Scheiben (4, 5) einer Rolle (1, 2), Sf ein Sicherheitsfaktor, dessen Wert durch die Betriebseinheit gegeben wird, und $\tau$ ein Drehmomentübertragungskoeffizient ist, dass der Sf/τ-Faktor durch einen Quotienten des Sicherheitsfaktors Sf und des Drehmomentübertragungskoeffizienten $\tau$ gegeben wird und dass der Drehmomentübertragungskoeffizient $\tau$ erhöht wird, wenn der Antriebsriemenschlupf S die kritische Grenze überschreitet.

5. Verfahren nach Anspruch 4, **dadurch gekennzeichnet, dass**, wenn der Antriebsriemenschlupf S die kritische Grenze unter unerwünschten Umständen überschreitet, zum Beispiel öfter als erwünscht, der Drehmomentübertragungskoeffizient $\tau$ dann dauerhaft erhöht wird.

6. Verfahren nach Anspruch 4 oder 5, **dadurch gekennzeichnet, dass** der Sicherheitsfaktor Sf einen Wert in einem Bereich zwischen 1,3 und 1, vorzugsweise größer als 1,1, aufweist.

7. Verfahren nach Anspruch 4, 5 oder 6, **dadurch gekennzeichnet, dass** der Wert des Sicherheitsfaktors Sf mit einem Grad des Antriebsriemenschlupfes S in Beziehung steht, der für das momentane Übersetzungsverhältnis des Getriebes und die axiale Klemmkraft Fax zulässig ist.

8. Verfahren nach Anspruch 1, **dadurch gekennzeichnet, dass** die Betriebsmaßnahme in einer Verringerung des zugeführten Drehmoments T besteht.

9. Verfahren nach Anspruch 8, **dadurch gekennzeichnet, dass** der Grad, zu dem das zugeführte Drehmoment T verringert wird, durch die Betriebseinheit als Funktion des Grades, zu dem der Antriebsriemenschlupf S die kritische Grenze überschreitet, bestimmt wird.

10. Verfahren nach Anspruch 8 oder 9, **dadurch gekennzeichnet, dass** die Betriebseinheit das zugeführte Drehmoment T verringert, indem sie ein Steuersignal an einen Antriebsmotor und/oder eine Kupplung, der bzw. die einem Antriebsstrang zugeordnet ist, in dem das Getriebe verwendet wird, abgibt.

11. Verfahren nach einem der vorhergehenden Ansprüche, **dadurch gekennzeichnet, dass** die Schlupferfassungsmittel den Grad des Antriebsriemenschlupfes S als die Differenz oder das Verhältnis zwischen einem geometrisch definierten Übersetzungsverhältnis GR des Getriebes und einem Verhältnis $\omega_{OUT}/\omega_{IN}$ zwischen den Drehzahlen der jeweiligen Rollen (1, 2) bestimmen und dass die Schlupferfassungsmittel mit einem oder beiden extremsten geometrisch definierten Übersetzungsverhältnissen GR des Getriebes, nämlich dem niedrigsten Übersetzungsverhältnis, das heißt dem niedrigen Verhältnis, und/oder dem größten Übersetzungsverhältnis, das heißt dem Overdrive-Verhältnis, derart vorprogrammiert werden, dass, zumindest dann, wenn das Getriebe eines der beiden extremen Übersetzungsverhältnisse GR angenommen hat, der Grad an Antriebsriemenschlupf S durch die Schlupferfassungsmittel bestimmt werden kann.

12. Verfahren nach einem der vorhergehenden Ansprüche, **dadurch gekennzeichnet, dass** die Schlupferfassungsmittel den Grad an Antriebsriemenschlupf S als die Differenz oder das Verhältnis zwischen einem geometrisch definierten Übersetzungsverhältnis GR des Getriebes und einem Verhältnis $\omega_{OUT}/\omega_{IN}$ zwischen den Drehzahlen der jeweiligen Rollen (1, 2) bestimmen und dass die Schlupferfassungsmittel einen Rollenscheibenpositionssensor zur Bestimmung der geometrisch definierten Übersetzungsverhältnisse GR des Getriebes umfassen, mit dem es möglich ist, mindestens die Position einer verschiebbaren Scheibe (4) einer Rolle (1, 2) zu bestimmen, wobei der Sensor vorzugsweise in der Nähe einer Achse der Rolle (1, 2) angeordnet ist.

13. Verfahren nach einem der vorhergehenden Ansprüche, **dadurch gekennzeichnet, dass** die Betriebseinheit mit einem charakteristischen Diagramm vorprogrammiert ist, in dem für mindestens eine Anzahl von Übersetzungsverhältnissen des Getriebes die axiale Klemmkraft Fax mit einem maximal möglichen Grad an Antriebsriemenschlupf S in Beziehung gesetzt wird, wobei diese Beziehungen als die Schadenslinien (A, B, C) bekannt sind.

14. Verfahren nach einem der vorhergehenden Ansprüche, **dadurch gekennzeichnet, dass** die Betriebseinheit mit Speicherrnitteln versehen ist, in denen im Falle einer Überschreitung der oben erwähnten kritischen Grenze für den Antriebsriemenschlupf S der Wert eines oder mehrerer zugeordneter Parameter gespeichert ist, wobei diese Parameter für Umstände charakteristisch sind, unter denen der Antriebsriemenschlupf auftritt, wie zum Beispiel das zugeführte Drehmoment, das Übersetzungsverhältnis, die Temperatur des Getriebes, die Straßenbedingungen und die Fahreigenschaften eines Fahrers eines Kraftfahrzeugs, in dem das Getriebe verwendet wird, und dass, wenn identische Umstände wieder auftreten, die Betriebsmaßnahme durch die Betriebseinheit als eine Präventivmaßnahme durchgeführt wird.

15. Stufenloses Getriebe, das gemäß einem oder mehreren der vorhergehenden Ansprüche betrieben wird.

## Revendications

1. Procédé de commande d'une transmission à rapport infiniment variable équipée de deux poulies (1, 2), qui sont chacune pourvues de deux flasques de poulie (4, 5) qui définissent entre eux une gorge conique et entre lesquels une courroie de transmission (3) est serrée par le biais d'une force axiale de serrage Fax pour transmettre un couple T fourni à la transmission, pendant le fonctionnement normal de la transmission, d'une poulie (1) à l'autre poulie (2) par le biais de la friction produite entre les flasques (4, 5), laquelle transmission est commandée par une unité de commande électronique qui peut influencer au moins la force axiale de serrage Fax, le procédé comprenant les étapes de détection du degré de mouvement entre les flasques de poulie (4, 5) et la courroie de transmission (3), c.-à-d. le glissement S de la courroie de transmission, par l'unité de commande assistée de moyens de détection du glissement, et, quand ledit degré de glissement S de la courroie de transmission dépasse une limite critique, d'utilisation par l'unité de commande d'une mesure de commande afin de réduire activement le degré de glissement S de la courroie de transmission, **caractérisé en ce que** ladite limite critique est déterminée en tant que fonction d'un degré de glissement maximum permissible S de la courroie de transmission qui est défini au moins en fonction du rapport de transmission instantané de la transmission et de la force axiale de serrage Fax.

2. Procédé selon la revendication 1, **caractérisé en ce que** la mesure de commande consiste à augmenter un facteur de multiplication, c.-à-d. le facteur $Sf/\tau$, qui est utilisé dans une relation, qui est gérée par l'unité de commande, entre le couple T fourni et la force axiale de serrage Fax qui doit être appliquée à la courroie de transmission (3) par une poulie (1, 2).

3. Procédé selon la revendication 2, **caractérisé en ce que** le degré d'augmentation du facteur de multiplication est déterminé par l'unité de commande en fonction du degré selon lequel le glissement S de la courroie de transmission dépasse la limite critique.

4. Procédé selon la revendication 2 ou 3, **caractérisé en ce que**, pendant le fonctionnement normal de la transmission, une relation, qui est gérée par l'unité de commande, entre le couple T fourni et la force axiale de serrage Fax qui doit être appliquée à la courroie de transmission (3) par une poulie (1, 2), est donnée par l'équation suivants :

$$Fax = Sf \cdot (T \cdot \cos(\tfrac{1}{2}\Phi)) / (2 \cdot R \cdot \tau),$$

où $\phi$ est un angle défini entre les flasques coniques de poulie (4, 5), R est un rayon de fonctionnement de la courroie de transmission (3) entre les flasques (4, 5) d'une poulie (1, 2), Sf est un facteur de sécurité ayant une valeur qui est donnée par l'unité de commande et $\tau$ est un coefficient de transmission du couple, **en ce que** le facteur $Sf/\tau$ est

donné par un quotient du facteur de sécurité Sf et du coefficient de transmission du couple τ et **en ce que** le coefficient de transmission du couple τ est augmenté si le glissement S de la courroie de transmission dépasse la limite critique.

**5.** Procédé selon la revendication 4, **caractérisé en ce que**, si le glissement S de la courroie de transmission dépasse la limite critique dans des circonstances indésirables, par exemple plus fréquemment que cela n'est souhaitable, le coefficient de transmission du couple τ est augmenté de façon permanente.

**6.** Procédé selon la revendication 4 ou 5, **caractérisé en ce que** le facteur de sécurité Sf a une valeur comprise dans une fourchette de 1,3 à 1, de préférence supérieure à 1,1.

**7.** Procédé selon la revendication 4, 5 ou 6, **caractérisé en ce que** la valeur du facteur de sécurité Sf est liée à un degré de glissement S de la courroie de transmission qui est permissible pour le rapport de transmission instantané de la transmission et la force axiale de serrage Fax.

**8.** Procédé selon la revendication 1, **caractérisé en ce que** la mesure de commande consiste à réduire le couple T fourni.

**9.** Procédé selon la revendication 8, **caractérisé en ce que** le degré selon lequel le couple T fourni est réduit est déterminé par l'unité de commande en fonction du degré selon lequel le glissement S de la courroie de transmission dépasse la limite critique.

**10.** Procédé selon la revendication 8 ou 9, **caractérisé en ce que** l'unité de commande réduit le couple T fourni en émettant un signal de commande adressé à un moteur d'entraînement et/ou à un embrayage associés à une chaîne cinématique dans laquelle est utilisée la transmission.

**11.** Procédé selon l'une quelconque des revendications précédentes, **caractérisé en ce que** les moyens de détection du glissement déterminent le degré de glissement S de la courroie de transmission en tant que la différence ou le rapport entre un rapport de transmission défini géométriquement dit GR de la transmission et un rapport $\omega_{OUT}/\omega_{IN}$ entre les vitesses de rotation des poulies respectives (1, 2), et **en ce que** les moyens de détection du glissement sont préprogrammés avec un ou avec les deux rapports de transmission définis géométriquement GR les plus extrêmes, à savoir le rapport de transmission le plus bas, c.-à-d. le rapport bas, et/ou le rapport de transmission le plus haut, c.-à-d. le rapport de surmultiplication, de manière à ce que, du moins quand la transmission a adopté un des deux rapports GR extrêmes, le degré de glissement S de la courroie de transmission puisse être déterminé par les moyens de détection du glissement.

**12.** Procédé selon l'une quelconque des revendications précédentes, **caractérisé en ce que** les moyens de détection du glissement déterminent le degré de glissement S de la courroie de transmission en tant que la différence ou le rapport entre un rapport de transmission défini géométriquement GR de la transmission et un rapport $\omega_{OUT}/\omega_{IN}$ entre les vitesses de rotation des poulies respectives (1, 2), et **en ce que** les moyens de détection du glissement comprennent un capteur de position de flasque de poulie pour déterminer les rapports de transmission définis géométriquement GR de la transmission, avec ledit procédé il est possible de déterminer au moins la position d'un flasque mobile (4) d'une poulie (1, 2), le capteur en question étant monté, de préférence, à proximité d'un axe de la poulie (1, 2).

**13.** Procédé selon l'une quelconque des revendications précédentes, **caractérisé en ce que** l'unité de commande est préprogrammée avec un diagramme de caractéristiques, dans ledit procédé, pour au moins un nombre de rapports de transmission de la transmission, la force axiale de serrage Fax est en relation avec un degré maximum permissible de glissement S de la courroie de transmission, ces relations étant connues en tant que lignes de risque de panne (A, B, C).

**14.** Procédé selon l'une quelconque des revendications précédentes, **caractérisé en ce que** l'unité de commande est équipée d'un moyen de mémoire, dans ledit procédé, en cas de dépassement de la limite critique de glissement maximum permissible S de la courroie de transmission, la valeur d'un où les valeurs de plusieurs paramètres associés sont stockées, les paramètres en question étant les caractéristiques des conditions dans lesquelles le glissement de la courroie se produit, comme par exemple le couple fourni, le rapport de transmission, la température de la transmission, l'état de la route et le style de conduite caractéristique du conducteur d'un véhicule à moteur dans lequel est utilisée la transmission, et **en ce que**, si des conditions identiques se reproduisent, la mesure de commande est mise en oeuvre par l'unité de commande en tant que mesure préventive.

15. Transmission à rapport infiniment variable utilisée avec un procédé de commande selon une ou plusieurs des revendications précédentes.

**FIG. 1**

**FIG. 2**

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1167839 A
- EP 1218654 A
- EP 1069331 A
- US 6436004 A
- EP 0626526 A